# EUROPEAN PATENT SPECIFICATION

(11) **EP 4 504 505 B1**
(45) Date of publication and mention of the grant of the patent: **28.10.2026**
(21) Application number: 22936673.7
(22) Date of filing: 02.08.2022
(51) Int. Cl.: B31C 7/08, B31B 50/16, A23G 9/50, A21B 5/02, A23P 30/00, B65B 5/08, A23G 9/28, B31B 50/06, B31B 50/34, B31B 50/98, B31C 7/10, A21C 15/00, A23G 7/00

(54) **CORNET CONE PACKAGE PRODUCTION MACHINE WITH HORIZONTAL FEEDING**
MASCHINE ZUR HERSTELLUNG VON MAISTEICHKEGELVERPACKUNGEN MIT HORIZONTALER ZUFÜHRUNG
MACHINE DE PRODUCTION D'EMBALLAGE CONIQUE DE CORNET À ALIMENTATION HORIZONTALE

(30) Priority: 08.04.2022 TR 202205634
(43) Date of publication of application: 12.02.2025
(73) Proprietor: Mondi Kale Nobel Ambalaj Sanayi Ve Ticaret Anonim Sirketi, Bakirkoy/Istanbul (TR)
(72) Inventor: SAHIN, Umit, Luleburgaz, Kirklareli (TR); IPEK, Mehmet Ulas, Bakirkoy, Istanbul (TR)
(74) Representative: Andrejewski - Honke Patent- und Rechtsanwälte Partnerschaft mbB
(86) International application number: PCT/TR2022/050809
(87) International publication number: WO 2023/195942

(56) References cited:
- WO-A1-2021/096452
- WO-A1-2021/096452
- JP-A- S5 648 901
- JP-A- S59 167 405
- JP-A- S59 167 405
- US-A- 2 612 016
- US-A- 4 259 827
- US-A- 4 259 827

## Description

### Technical Field

The invention is related to a cornet cone package production machine with horizontal feeding used in the production of cornet cone packages used in the packaging of cornet-type ice-creams.

The invention is particularly related to a cornet cone package production machine with horizontal feeding which provides for the cornet cone packages to be horizontally fed and brought into a cone shape by being crimped.

### Prior Art

Cornet-type ice-creams are among the top popular ice-creams frequently consumed. These ice-creams basically have conically shaped cornets filled with ice-creams having contents such as chocolate, toppings, fruits, nuts etc. Said cornets are sold by being placed in sleeve-like packages that cover the cornet part.

In the art, the standard cornet cone packages are cut into specific shapes before production and produced by being crimped into a conical shape in crimping machines. For this purpose, the cornet cone packages cut are stacked in order to be transferred to the crimping machines after the cutting process. The crimping machines shape the specifically shaped packages that are stacked into cones by crimping the same through rotation and form cone packages that are suitable for cornet cones. However, during the transmission of the specifically shaped packages to the crimping machine, problems such as deformation, tearing, and flying away are encountered and errors occur in production.

As a result of the research of the literature, document number EP1864791 can be given as an example of the known state of the art. Said document is related to the procedure for the production of conical ice-cream packages. In said invention, the production of the cornet cone packages after a four-step procedure has been mentioned. In the first stage the straight package bobbin is divided into specifically shaped stripes by means of a custom knife structure and having been divided into specific shapes the bobbin comes out of the machine in two ways as plane or reverse. In the second stage the reverse stripe is turned by a turning machine and readied for the cutting machine. In the third stage the bobbins prepared are transferred to the crimping machine by being subjected to a cutting procedure and in the fourth stage, the pieces coming out of the cutting machine are transformed into cone packages by crimping. In said invention, a method which produces cone packages with separate machines has been described. This requires multiple processes for various stages in the cone package production. WO 2021/096452 relates to a cutting, crimping and stacking machine for producing conical cornet cone packages for ice cream, which is capable of automatically performing cutting, crimping, and stacking operations. It discloses a production machine comprising a cutting unit for cutting packaging material supplied from a roller into pieces of predetermined shape and size, transfer and conveying units for moving the cut pieces to a crimping station, upper and lower conical crimping moulds which rotate to form conical packages, glue application and trimming elements associated with the crimping process, and a collecting chamber in which the finished conical packages are stacked.

In consequence, the presence of the above-mentioned problems and inefficiency of the present solutions requires a development in the related technical field.

### Purpose of the Invention

The present invention is related to a cornet cone package production machine with horizontal feeding that eliminates the above-mentioned disadvantages and brings new advantages to the related technical field.

The main purpose of the invention is to present a production machine which provides that the cornet cone packages are horizontally fed and brought to a cone shape by being crimped.

The purpose of the invention is to provide that the cornet cone packages are directed by being rotated by means of disks with the help of air by being stacked next to each other horizontally and in an orderly manner, crimped by being pushed in between the crimping heads, and stacked within each other by being brought into a cone shape after the crimping.

Another purpose of the invention is to provide that the production is carried out without errors with the cornet cone packages that are stacked next to each other horizontally being transferred properly in between the crimping heads.

Another purpose of the invention is to provide that the specifically shaped cornet cone packages are stacked over a single machine, transferred automatically to the crimping procedure, brought to a cone shape by being crimped and packages that are brought into a cone shape are stacked within each other.

**In** order to fulfill all the purposes that are mentioned above and that can be inferred from the detailed description; the invention is a production machine which is used in producing the cornet cone packages used in the packaging of cornet-type ice-creams and which provides for the cornet cone packages to be horizontally fed and brought into a cone shape by being crimped, comprising
- a stacking table which stacks the cornet cone packages side by side,
- a pusher table which advances the cornet cone packages on the stacking table forward from the back side,
- an upper pressing table which prevents the cornet cone packages on the stacking table from getting mixed by pressing on the same,
- an air hose which provides that the cornet cone packages on the stacking table are separated from each other by blowing air to them by means of at least one hose arm,
- an axle fixing unit which is positioned at the front of the stacking table,
- a semicircle disk in the form of half a circle which makes a rotational movement on the axle fixing unit and holds the cornet cone packages on the stacking table at certain intervals and pulls the same,
- a separator arm which moves back and forth by being connected on the axle fixing unit and advances one cornet cone package at a time with its back-and-forth movement,
- a fixing arm which is connected to the separator arm, and which moves up and down by means of the separator movement arm that moves up and down,
- a sled which extends forwards from the back surface of the axle fixing unit and carries the cornet cone packages pulled with the semicircle disk for the crimping procedure,
- a lower crimping head and an upper crimping head which crimp the cornet cone packages carried inside the sled and bring them into conical cone packages, having reverse rotational movements,
- a cone stacking unit which is positioned opposite the lower crimping head and upper crimping head, and which stacks the conical cone packages within each other,
- a cone conveyor belt which pulls the conical cone packages into the cone stacking unit from the lower crimping head and upper crimping head.

The structural and characteristic features and all the advantages of the invention will be understood more clearly thanks to the figures given below and the detailed description written by making references to these figures. Therefore, the evaluation should be made in consideration of these figures and the detailed description.

### Figures Aiding the Description of the Invention

**Figure 1****:** Representative view of the cornet cone package production machine of the invention.

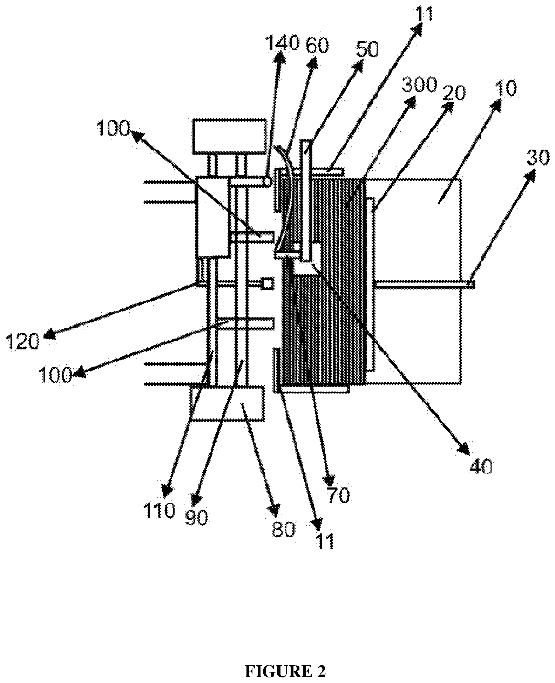

**Figure 2****:** Detailed view of the cornet cone package production machine of the invention.

### Description of the Reference Parts

**10.** Stacking table
**11.** Limiter arm
**12.** Arranging arm
**20.** Pusher table
**30.** Pusher arm
**40.** Upper pressing table
**50.** Upper pressing arm
**60.** Air hose
**70.** Hose arm
**80.** Axle fixing unit
**90.** Semicircle disk axle
**100.** Semicircle disk
**110.** Separator axle
**120.** Separator arm
**130.** Fixing arm
**140.** Separator movement arm
**150.** Sled
**160.** Lower crimping head
**170.** Lower crimper motor
**180.** Upper crimping head
**190.** Upper crimper motor
**200.** Cone stacking unit
**210.** Cone conveyor belt
**300.** Cornet cone package
**301.** Conical cone package

### Detailed Description of the Invention

In this detailed description the preferred alternatives of the production machine of the invention are described only for a better understanding of the subject and in the way to create no limiting effect whatsoever.

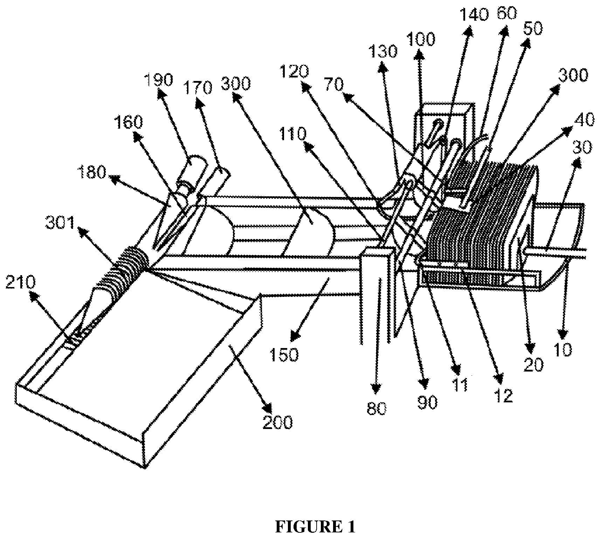

In Figure 1, representational view of the production machine of the invention has been given. Accordingly, the production machine basically comprises a stacking table (10) which stacks the cornet cone packages (300) side by side, a pusher table (20) which advances the cornet cone packages (300) on the stacking table (10) forward from the back side, an upper pressing table (40) which prevents the cornet cone packages (300) on the stacking table (10) from getting mixed by pressing on the same, an air hose (60) which provides that the cornet cone packages (300) on the stacking table (10) are separated from each other by blowing air to them by means of at least one hose arm (70), an axle fixing unit (80) which is positioned at the front of the stacking table (10), a semicircle disk (100) in the form of half a circle which makes a rotational movement by means of the semicircle disk axle (90) on the axle fixing unit (80) and holds the cornet cone packages (300) on the stacking table (10) at certain intervals and pulls the same, a separator arm (120) which moves back and forth by being connected on the axle fixing unit (80) by means of the separator axle (110) and advances one cornet cone package (300) at a time with its back-and-forth movement, a fixing arm (130) which is connected to the separator arm (120) and which moves up and down by means of the separator movement arm (140) that moves up and down, a sled (150) which extends forwards from the back surface of the axle fixing unit (80) and carries the cornet cone packages (300) pulled with the semicircle disk (100) for the crimping procedure, a lower crimping head (160) and an upper crimping head (180) which crimp the cornet cone packages (300) carried inside the sled (150) and bring them into conical cone packages (301), having reverse rotational movements, a cone stacking unit (200) which stacks the conical cone packages (301) within each other, a cone conveyor belt (210) which pulls the conical cone packages (301) into the cone stacking unit (200) from the lower crimping head (160) and upper crimping head (170).

In the production machine of the invention, the specifically shaped cornet cone packages (300) are stacked next to each other on the package stacking table (10) in order to be brought into cone form. The cornet cone packages (300) on said stacking table (10) are pushed forward by means of a pusher table (20) from their back side. There is a pusher arm (30) behind the pusher table (20). The pusher arm (30) applies a forward driving force on the pusher table (20).

On both sides of the stacking table (10), there are limiter arms (11) which prevent the cornet cone packages (300) pressed by the pusher table (20) collectively, and arranging arms (12) which provide that the cornet cone packages (300) are arranged within the stacking table (10) next to each other in an orderly manner.

The cornet cone packages (300) on the stacking table (10) are pressed by means of the upper pressing table (40) on the top and prevented from getting mixed. There is an upper pressing arm (50) on the upper pressing table (40). The upper pressing arm (50) applies a downward driving force on the upper pressing table (40).

To the cornet cone packages (300) on the stacking table (10) air is blown by means of an air hose (60) which has at least one hose arm (70) and it is provided that the cornet cone packages (300) are separated from each other.

An axle fixing unit (80) is positioned at the front of the stacking table (10). At least one semicircle disk (100) is connected on said axle fixing unit (80) such that it will make a rotational movement by means of the semicircle disk axle (90). Said semicircle disk (100) holds the cornet cone packages (300) on the stacking table (10) by making a rotational movement by means of the semicircle disk axle (90) and pulls the same. The semicircle disk (100) contacts the cornet cone packages (300) at certain time intervals as per its semicircle form and provides that the cornet cone packages (300) are pulled as spaced from each other.

A separator arm (120) is connected on the axle fixing unit (80) which moves back and forth by means of the separator axle (110) in the way to be aligned on the semicircle disk axle (90).

Said separator arm (120) advances one cornet cone package (300) at a time by moving back and forth by means of the separator axle (110). A fixing arm (130) which moves up and down is connected to the separator arm (120) by means of a separator movement arm (140) which moves up and down.

A sled (150) extends forwards from the back side of the axle fixing unit (80). The sled (150) carries the cornet cone packages (300) that are pulled with the semicircle disk (100) which makes a rotational movement for the crimping procedure.

There is a lower crimping head (160) and an upper crimping head (180) which are located at the end of the sled (150), and which crimp the cornet cone packages (300) carried inside the sled (150) and bring them into conical cone packages (301), having reverse rotational movements. Said lower crimping head (160) and an upper crimping head (180) make reverse rotational movements from each other by means of the lower crimper motor (170) and the upper crimper motor (190), respectively.

There is a cone stacking unit (200) which is positioned between the lower crimping head (160) and upper crimping head (180), and which stacks the conical cone packages (301) within each other. Said cone stacking unit (200) has a cone conveyor belt (210) that pulls the conical cone packages (301) from the lower crimping head (160) and upper crimping head (170) into the cone stacking unit (200).

*The working principle of the production machine according to the invention is as follows;*
The specifically shaped cornet cone packages (300) are stacked next to each other on the stacking table (10) with the air blown by means of an air hose (60) that has at least one hose arm (70) to separate the same. In the meantime, said semicircle disk (100) which makes a rotational movement holds the cornet cone packages (300) on the stacking table (10) by making a rotational movement by means of the semicircle disk axle (90) and pulls the same.

The cornet cone packages (300) positioned within the sled (150) are brought into a conical cone package (301) by being crimped by means of a lower crimping head (160) and an upper crimping head (180) that has a reverse rotational movement from each other.

The conical cone packages (301) are arranged within each other by being pulled from the lower crimping head (160) and upper crimping head (180) by means of the cone conveyor belt (210) and falls into the cone stacking unit (200) as stacked within each other.

## Claims

1. A production machine which is used in producing the cornet cone packages (300) used in the packaging of cornet-type ice-creams and which provides for the cornet cone packages (300) to be horizontally fed and brought into a cone shape by being crimped, ***characterized in that;*** it comprises
- a stacking table (10) which stacks the cornet cone packages (300) side by side,
- a pusher table (20) which advances the cornet cone packages (300) on the stacking table (10) forward from the back side,
- an upper pressing table (40) which prevents the cornet cone packages (300) on the stacking table (10) from getting mixed by pressing on the same,
- an air hose (60) which provides that the cornet cone packages (300) on the stacking table (10) are separated from each other by blowing air to them by means of at least one hose arm (70),
- an axle fixing unit (80) which is positioned at the front of the stacking table (10),
- a semicircle disk (100) in the form of half a circle which makes a rotational movement on the axle fixing unit (80) and holds the cornet cone packages (300) on the stacking table (10) at certain intervals and pulls the same,
- a separator arm (120) which moves back and forth by being connected on the axle fixing unit (80) and advances one cornet cone package (300) at a time with its back-and-forth movement,
- a fixing arm (130) which is connected to the separator arm (120), and which moves up and down by means of the separator movement arm (140) that moves up and down,
- a sled (150) which extends forwards from the back surface of the axle fixing unit (80) and carries the cornet cone packages (300) pulled with the semicircle disk (100) for the crimping procedure,
- a lower crimping head (160) and an upper crimping head (180) which crimp the cornet cone packages (300) carried inside the sled (150) and bring them into conical cone packages (301), having reverse rotational movements,
- a cone stacking unit (200) which is positioned opposite the lower crimping head (160) and upper crimping head (180), and which stacks the conical cone packages (301) within each other,
- a cone conveyor belt (210) which pulls the conical cone packages (301) into the cone stacking unit (200) from the lower crimping head (160) and upper crimping head (170).

2. A production machine according to Claim 1, **characterized in that**; it comprises a pusher arm (30) which is located behind said pusher table (20), and which applies a forward driving force to the pusher table (20).

3. A production machine according to Claim 1, **characterized in that**; it comprises an upper pressing arm (50) which is located on said upper pressing table (40), and which applies a downward driving force to the upper pressing table (40).

4. A production machine according to Claim 1, **characterized in that**; it comprises a semicircle disk axle (90) which provides that said semicircle disk (100) is connected on the axle fixing unit (80) such that it makes a rotational movement.

5. A production machine according to Claim 1, **characterized in that**; it comprises a separator axle (110) that provides said separator arm (120) onto the axle fixing unit (80) such that it aligns on the semicircle disk axle (90).

6. A production machine according to Claim 1, **characterized in that**; it comprises a limiter arm (11) which is located at both sides of said stacking table (10), and which prevents the cornet cone packages (300) pressed by the pusher table (20) from being collectively pushed.

7. A production machine according to Claim 1, **characterized in that**; it comprises an arranging arm (12) which is located at both sides of said stacking table (10), and which provides for the cornet cone packages (300) to be arranged within the stacking table (10) next to each other in an orderly manner.

## Patentansprüche

1. Produktionsmaschine, die zum Herstellen der Waffelhörnchenverpackungen (300) verwendet wird, welche beim Verpacken von Speiseeis vom Waffelhörnchentyp verwendet werden, und die vorsieht, dass die Waffelhörnchenverpackungen (300) horizontal zugeführt werden und durch Crimpen in eine Konusform gebracht werden, **dadurch gekennzeichnet, dass** sie umfasst:
- einen Stapeltisch (10), der die Waffelhörnchenverpackungen (300) nebeneinander stapelt,
- einen Schiebertisch (20), der die Waffelhörnchenverpackungen (300) auf dem Stapeltisch (10) von der Rückseite her nach vorne bewegt,
- einen oberen Presstisch (40), der ein Durcheinandergeraten der Waffelhörnchenverpackungen (300) auf dem Stapeltisch (10) verhindert, indem er auf dieselben drückt,
- einen Luftschlauch (60), der dafür sorgt, dass die Waffelhörnchenverpackungen (300) auf dem Stapeltisch (10) voneinander getrennt werden, indem diesen Luft mittels mindestens eines Schlaucharms (70) zugeblasen wird,
- eine Achsfixiereinheit (80), die an der Vorderseite des Stapeltischs (10) angeordnet ist,
- eine Halbkreisscheibe (100) in Form eines halben Kreises, die eine Drehbewegung an der Achsfixiereinheit (80) ausführt und die Waffelhörnchenverpackungen (300) in bestimmten Abständen auf dem Stapeltisch (10) hält und dieselben zieht,
- einen Trennarm (120), der sich, indem er an der Achsfixiereinheit (80) verbunden ist, vor und zurück bewegt und der mit seiner Vor- und Zurückbewegung jeweils eine Waffelhörnchenverpackung (300) auf einmal vorbewegt,
- einen Fixierarm (130), der mit dem Trennarm (120) verbunden ist und sich mittels des Trennbewegungsarms (140), der sich auf und ab bewegt, auf und ab bewegt,
- einen Schlitten (150), der sich von der hinteren Oberfläche der Achsfixiereinheit (80) nach vorne erstreckt und die Waffelhörnchenverpackungen (300), die mit der Halbkreisscheibe (100) für den Crimp-Vorgang gezogen werden, trägt,
- einen unteren Crimp-Kopf (160) und einen oberen Crimp-Kopf (180), welche die Waffelhörnchenverpackungen (300), die innerhalb des Schlittens (150) getragen werden, crimpen und sie in konische Waffelhörnchenverpackungen (301) verwandeln, mit gegenläufigen Drehbewegungen,
- eine Konusstapeleinheit (200), die gegenüber dem unteren Crimp-Kopf (160) und dem oberen Crimp-Kopf (180) angeordnet ist und welche die konischen Waffelhörnchenverpackungen (301) ineinander stapelt,
- ein Konusförderband (210), das die konischen Waffelhörnchenverpackungen (301) von dem unteren Crimp-Kopf (160) und dem oberen Crimp-Kopf (170) in die Konusstapeleinheit (200) zieht.

2. Produktionsmaschine nach Anspruch 1, **dadurch gekennzeichnet, dass** sie einen Schieberarm (30) umfasst, der hinter dem Schiebertisch (20) angeordnet ist und der eine Vorwärtsantriebskraft auf den Schiebertisch (20) ausübt.

3. Produktionsmaschine nach Anspruch 1, **dadurch gekennzeichnet, dass** sie einen oberen Pressarm (50) umfasst, der an dem oberen Presstisch (40) angeordnet ist und der eine Abwärtsantriebskraft auf den oberen Presstisch (40) ausübt.

4. Produktionsmaschine nach Anspruch 1, **dadurch gekennzeichnet, dass** sie eine Halbkreisscheibenachse (90) umfasst, die vorsieht, dass die Halbkreisscheibe (100) an der Achsfixiereinheit (80) derart verbunden ist, dass sie eine Drehbewegung ausführt.

5. Produktionsmaschine nach Anspruch 1, **dadurch gekennzeichnet, dass** sie eine Trennachse (110) umfasst, die den Trennarm (120) derart an der Achsfixiereinheit (80) vorsieht, dass er auf der Halbkreisscheibenachse (90) ausgerichtet ist.

6. Produktionsmaschine nach Anspruch 1, **dadurch gekennzeichnet, dass** sie einen Begrenzungsarm (11) umfasst, der auf beiden Seiten des Stapeltisches (10) angeordnet ist und der verhindert, dass die durch den Schiebertisch (20) mit Druck beaufschlagten Waffelhörnchenverpackungen (300) gemeinsam geschoben werden.

7. Produktionsmaschine nach Anspruch 1, **dadurch gekennzeichnet, dass** sie einen Ausrichtarm (12) umfasst, der auf beiden Seiten des Stapeltisches (10) angeordnet ist und der dafür sorgt, dass die Waffelhörnchenverpackungen (300) innerhalb des Stapeltisches (10) auf geordnete Weise nebeneinander angeordnet werden.

## Revendications

1. Machine de production utilisée pour fabriquer des emballages en forme de cornet (300) utilisés pour le conditionnement de glaces de type cornet et qui permet l'alimentation horizontale des emballages (300) et leur mise en forme conique par sertissage, **caractérisée en ce que** elle comprend
- une table d'empilage (10) qui empile les emballages en forme de cornets (300) côte à côte,
- une table de poussée (20) qui fait avancer les emballages en forme de cornets (300) sur la table d'empilage (10) depuis le côté arrière,
- une table de pression supérieure (40) qui empêche les emballages en forme de cornets (300) situés sur la table d'empilage (10) de se mélanger en exerçant une pression sur ceux-ci,
- un flexible d'air (60) qui permet de séparer les emballages en forme de cornets (300) présents sur la table d'empilage (10) les uns des autres en y soufflant de l'air au moyen d'au moins un bras de soufflage (70),
- une unité de fixation d'axe (80) qui est positionnée à l'avant de la table d'empilage (10),
- un disque en demi-cercle (100) sous la forme d'un demi-cercle qui effectue un mouvement de rotation sur l'unité de fixation d'axe (80) et retient les emballages en forme de cornets (300) situés sur la table d'empilage (10) à intervalles réguliers et les tire,
- un bras séparateur (120) qui se déplace en va-et-vient en étant raccordé à l'unité de fixation d'axe (80) et fait avancer un emballage en forme de cornet (300) à la fois grâce à son mouvement de va-et-vient,
- un bras de fixation (130) qui est raccordé au bras séparateur (120) et se déplaçant de haut en bas au moyen du bras d'actionnement du séparateur (140) qui se déplace de haut en bas,
- un chariot (150) qui s'étend vers l'avant depuis la face arrière de l'unité de fixation d'axe (80) et transporte les emballages en forme de cornets (300) tirés par le disque en demi-cercle (100) en vue de l'opération de sertissage,
- une tête de sertissage inférieure (160) et une tête de sertissage supérieure (180) qui sertissent les emballages en forme de cornets (300) transportés dans le chariot (150) pour les transformer en emballages en forme de cornets coniques (301), étant animés de mouvements de rotation inverses,
- une unité d'empilage de cônes (200) qui est positionnée en regard de la tête de sertissage inférieure (160) et de la tête de sertissage supérieure (180) et qui empile les emballages en forme de cornets coniques (301) les uns dans les autres,
- une bande transporteuse de cônes (210) qui achemine les emballages en forme de cornets coniques (301) vers l'unité d'empilage de cônes (200) depuis la tête de sertissage inférieure (160) et la tête de sertissage supérieure (170).

2. Machine de production selon la revendication 1, **caractérisée en ce qu'**elle comprend un bras poussoir (30) qui est situé derrière ladite table de poussée (20) et qui applique une force d'entraînement vers l'avant à la table de poussée (20).

3. Machine de production selon la revendication 1, **caractérisée en ce qu'**elle comprend un bras de pression supérieur (50) qui est situé sur ladite table de pression supérieure (40) et qui applique une force d'entraînement vers le bas à la table de pression supérieure (40).

4. Machine de production selon la revendication 1, **caractérisée en ce qu'**elle comprend un axe de disque en demi-cercle (90) permettant de raccorder ledit disque en demi-cercle (100) à l'unité de fixation d'axe (80) de manière à ce qu'il effectue un mouvement de rotation.

5. Machine de production selon la revendication 1, **caractérisée en ce qu'**elle comprend un axe de séparateur (110) permettant de monter ledit bras séparateur (120) sur l'unité de fixation d'axe (80) de manière à ce qu'il s'aligne sur l'axe de disque en demi-cercle (90).

6. Machine de production selon la revendication 1, **caractérisée en ce qu'**elle comprend un bras limiteur (11) qui est situé des deux côtés de ladite table d'empilage (10) et qui empêche les emballages en forme de cornets coniques (300), poussés par la table de poussée (20), d'être poussés en bloc.

7. Machine de production selon la revendication 1, **caractérisée en ce qu'**elle comprend un bras de disposition (12) qui est situé des deux côtés de ladite table d'empilage (10) et qui permet de disposer les emballages en forme de cornet (300) sur la table d'empilage (10), les uns à côté des autres, de manière ordonnée.
